Europäisches Patentamt

European Patent Office

Office européen des brevets

(19)

(11) Veröffentlichungsnummer: **0 283 569**
**B1**

(12) # EUROPÄISCHE PATENTSCHRIFT

(45) Veröffentlichungstag der Patentschrift:
29.08.90

(21) Anmeldenummer: 87117952.9

(22) Anmeldetag: 04.12.87

(51) Int. Cl.⁵: **A47J 31/057**, A47J 31/06

(54) **Elektrisch betriebene Kaffeemaschine.**

(30) Priorität: 20.02.87 DE 8702616 U

(43) Veröffentlichungstag der Anmeldung:
28.09.88 Patentblatt 88/39

(45) Bekanntmachung des Hinweises auf die Patenterteilung:
29.08.90 Patentblatt 90/35

(84) Benannte Vertragsstaaten:
AT BE FR GB IT NL

(56) Entgegenhaltungen:
EP-A- 0 163 896
DE-A- 2 605 957

(73) Patentinhaber: ROBERT KRUPS STIFTUNG & CO. KG.,
Heresbachstrasse 29, D-5650 Solingen 19(DE)

(72) Erfinder: Rixen, Edgar, Taunusstrasse 14,
D-5650 Solingen 11(DE)

(74) Vertreter: Buse, Karl Georg, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2(DE)

ACTORUM AG

## Beschreibung

Die Erfindung bezieht sich auf eine elektrisch betriebene Kaffeemaschine mit einer Heizeinrichtung und einem Gehäuse, an dem ein Filterträger gelagert ist, der einen mit einer Handhabe ausgerüsteten Filter aufnimmt und der über eine Schwenkachse derart mit dem Gehäuse verbunden ist, daß wahlweise sein Überführen in eine Arbeitslage und eine Öffnungslage durchführbar ist.

Derartige elektrisch betriebene Kaffeemaschinen sind in zahlreichen Ausführungsformen bekannt (vgl. z.B. EP-A 0 163 896). Die Handhabe des Filters soll das Anbringen bzw. das Entfernen des Filters aus dem Filterträger erleichtern. Bei bekannten Ausführungsformen derartiger Kaffeemaschinen ist die Handhabe derart am Filter angebracht, daß sie in der Arbeits- oder Schließlage über den Filterträger sichtbar vorsteht. Dadurch wird nicht nur das Aussehen der Kaffeemaschine nachteilig beeinträchtigt sondern es ergeben sich auch Mängel bei der Benutzung der Kaffeemaschine. Die Praxis hat gezeigt, daß ein Benutzer einer solchen Kaffeemaschine ungewollt an der verhältnismäßig weit vorstehenden Handhabe hängen bleiben kann, so daß die Gefahr des Umwerfens der Kaffeemaschine besteht. Dies bringt insbesondere dann für den Benutzer eine erhebliche Verletzungsgefahr mit sich, wenn sich in dem Filter und/oder dem Auffanggefäß erhitzter Kaffee befindet.

Eine der Aufgaben der vorliegenden Erfindung besteht darin, Kaffeemaschinen der eingangs näher gekennzeichneten Art weiter zu verbessern, insbesondere derart, daß die angeführten Nachteile bekannter Ausführungsformen beseitigt werden. Insbesondere soll die Kaffeemaschine mit einfachen Mitteln so umgestaltet werden, daß ein unbeabsichtigtes Umwerfen der mit heißem Kaffee gefüllten Teile weitgehend vermieden wird.

Dieses Ziel ist erfindungsgemäß bei einer gattungsgemäßen Kaffeemaschine dadurch erreicht, daß in der Arbeitslage des Filterträgers die Handhabe des Filters nach außen abgedeckt in einer Aufnahme des Gehäuses angeordnet ist. Durch die erfindungsgemäße Gestaltung der Kaffeemaschine erhält diese zunächst ein gefälliges Aussehen, weil in der Arbeits- oder Schließlage die für den Betrachter sichtbare Fläche des Filterträgers überhaupt nichtmehr durch eine Handhabe unterbrochen ist. Dadurch ist auch zugleich die Gefahr beseitigt, daß der Benutzer ungewollt an der weit vorragenden Handhabe des Filters hängenbleiben und dabei die Kaffeemaschine umstürzen kann, so daß das Verbrühen des Benutzers durch den heißen Kaffee möglich ist.

Bei der bevorzugten Ausführungsform der Erfindung ist die Aufnahme des Gehäuses der Kaffeemaschine nach unten hin durch einen Vorsprung begrenzt. Unter diesem Vorsprung sind Lagerstellen für einen schwenkbaren Betätigungshebel einer Verschlußeinrichtung für den Auslauf des Filters angeordnet. Der Vorsprung ist dabei zweckmäßig dem Gehäuse unmittelbar angeformt. Eine separate Herstellung und ein anschließendes Verbinden dieses Teiles mit dem Gehäuse entfällt.

Da bei dem infrage kommenden Kaffeemaschinen der Filter immer in einer ganz bestimmten Lage mit den Filterträger lösbar verbunden werden muß, ist die Gewähr dafür gegeben, daß nach dem Einschwenken des Filterträgers in seine Arbeitslage die Handhabe in einer Aufnahme des Gehäuses verbleibt und daher für den Benutzer nicht mehr sichtbar und auch nicht mehr zugänglich ist. Dagegen gelangt die Handhabe nach der Fertigstellung des Kaffees dadurch wieder in die Entnahmelage des Filters, daß der Filterträger aus der Aufnahme herausgeschwenkt wird.

Bei einer bekannten Ausführungsform einer elektrisch betriebenen Kaffeemaschine dieser Art ist der Filterträger über eine seine gesamte Höhe überragende Drehachse mit dem Gehäuse verbunden. Diese Ausführungsform der Drehachse erfordert einen hohen Materialeinsatz, was zu einer Verteuerung der Kaffeemaschine führt. Darüber hinaus haben sich in der Praxis aber auch Mängel gezeigt, die darin bestehen, daß dieAchse aus ihren Lagerstellen herausgleiten kann und damit die Verbindung zwischen dem Filterträger und dem Gehäuse ungewollt gelöst wird. Eine weitere Aufgabe der vorliegenden Erfindung besteht darin, hier Abhilfe zu schaffen. Es soll somit eine Verbindung zwischen dem Filterträger und dem Gehäuse der Kaffeemaschine geschaffen werden, die nicht nur wirtschaftlich hergestellt werden kann sondern die auch beim Gebrauch der Kaffeemaschine ihre einmal eingenommene Lage beibehält.

Zur Lösung dieser Aufgabe wird erfindungsgemäß vorgeschlagen, das Gehäuse einer Kaffeemaschine gemäß Anspruch 2 eine vorspringende Wand aufweisen zu lassen, die an ihren diametral gegenüberliegenden Enden je eine Verdickung aufweist, deren Bohrung jeweils zur Unterbringung eines kurz bemessenen Bolzens dient, wobei die beiden Bolzen gemeinsam eine Schwenkachse des Filterträgers bilden. Anstelle einer einzigen durchgehenden, in der Regel aus Metall gefertigten langen Drehachse werden somit nur kurz bemessene Bolzenabschnitte benutzt, die darüber hinaus noch fest - also unverlierbar - in den Verdickungen der vorspringenden Wand des Gehäuses angeordnet werden können. Auf diese Weise wird mit einfachen Mitteln eine dauerhafte Verbindung zwischen dem Filterträger und dem Gehäuse geschaffen, die darüber hinaus auch wirtschaftlich gefertigt werden kann, weil sie mit kurzen Bolzenabschnitten auskommt.

Es empfiehlt sich, wenn der obere der beiden Bolzen zugleich die Bohrung einer Lagerstelle des Auslegers des Gehäuses der Kaffeemaschine durchquert. Dies macht sich vorteilhaft beim Anbringen des Bolzens bemerkbar, weil dieser in die nach oben offene Bohrung der Lagerstelle des Auslegers eingeführt und dann in die darunterliegende Bohrung der Verdickung eingeschoben werden kann.

Der Filterträger weist zweckmäßig einen zwischen den beiden Verdickungen der vorspringenden Wand des Gehäuses liegenden und in seinen Abmessungen den Verdickungen angepaßten Bereich auf. dadurch ergibt sich ein gefälliges Aussehen für den gesamten Lagerbereich des Filterträgers.

Dabei ist es zweckmäßig, die Längenabmessungen der vorspringenden Wand des Gehäuses so zu bemessen, daß ein Verschwenken des Filtertägers um mindestens 180° aus der Schließlage in die Öffnungslage gegeben ist.

Auf der Zeichnung ist die Erfindung in einem Ausführungsbeispiel dargestellt und zwar zeigen:

Fig. 1 die erfindungsgemäße elektrisch betriebene Kaffeemaschine, teilweise in Seitenansicht, teilweise im Schnitt und teilweise weggebrochen, wobei der rechte Teil der Figur teilweise um 90° gegenüber dem linken Teil versetzt angeordnet ist,

Fig. 2 im verkleinerten Maßstab und in Seitenansicht, teilweise weggebrochen, die elektrisch betriebene Kaffeemaschine gemäß der Fig. 1 der Zeichnung,

Fig. 3 einen Schnitt durch die elektrisch betriebene Kaffeemaschine entlang der Linie III-III in der Öffnungslage des Filterträgers und bei entferntem Filter,

Fig. 4 in Unteransicht und vergrößertem Maßstab einen Betätigungshebel für die elektrisch betriebene Kaffeemaschine gemäß der Fig. 1,

Fig. 5 einen Längsmittelschnitt durch den Betätigungshebel gemäß der Fig. 4 der Zeichnung,

Fig. 6 den Betätigungshebel gemäß der Fig. 4 der Zeichnung, jedoch in Draufsicht,

Fig. 7 ebenfalls im vergrößerten Maßstab und in Unteransicht einen Ventilhebel der elektrisch betriebenen Kaffeemaschine gemäß der Fig. 1 der Zeichnung,

Fig. 8 einen Längsmittelschnitt durch den Ventilhebel gemäß der Fig. 7 der Zeichnung mit dem in strichpunktierten Linien dargestellten Dichtungselement und

Fig. 9 den Ventilhebel nach der Fig. 7 der Zeichnung, jedoch in Draufsicht.

Es sei zunächst erwähnt, daß in den Figuren der Zeichnungen nur diejenigen Teile einer elektrisch betriebenen Kaffeemaschine dargestellt sind, die für das Verständnis der Erfindung Bedeutung haben. So fehlen beispielsweise der Frischwasserbehälter, das Steigrohr, die Heizeinrichtung sowie elektrische Regel- und Steuereinrichtungen. Alle in den Zeichnungen nicht dargestellten Teile einer elektrisch betriebenen Kaffeemaschine können sowohl einen an sich bekannten Aufbau haben als auch in bekannter Weise in dem Gehäuse der elektrisch betriebenen Kaffeemaschine untergebracht sein.

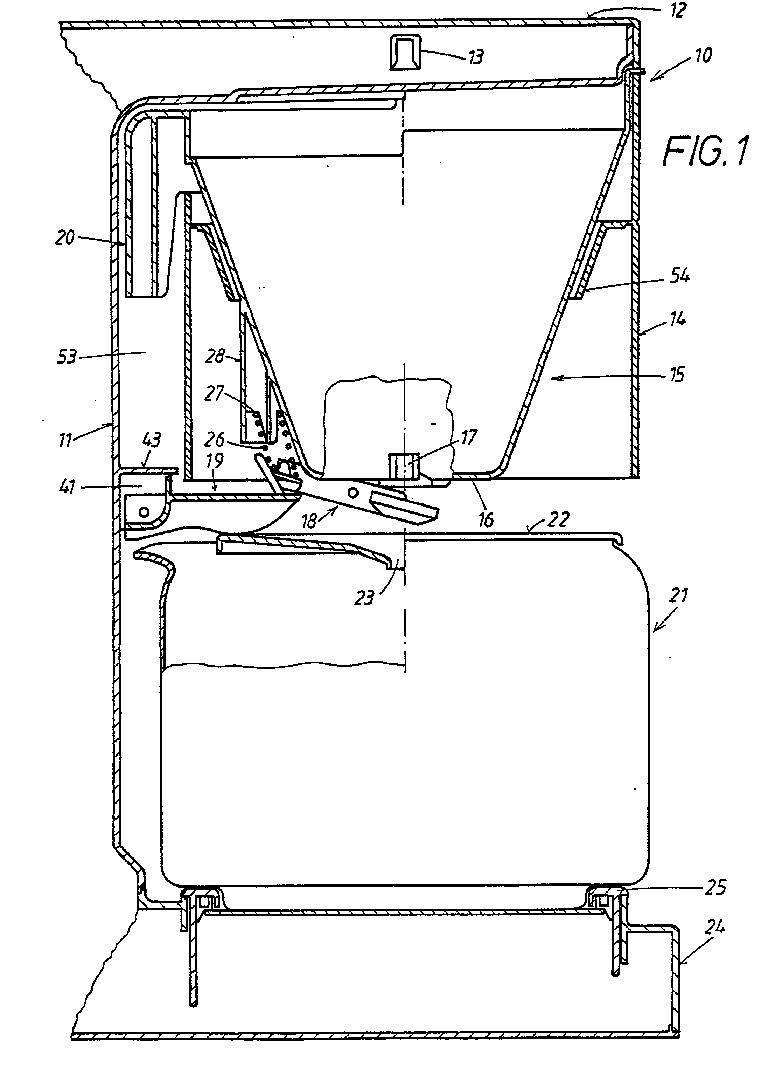

Dem Ausführungsbeispiel nach der Fig. 1 der Zeichnung ist eine generell mit 10 bezeichnete elektrisch betriebene Kaffeemaschine zugrundegelegt. Diese hat ein Gehäuse 11, das in seinem in der Fig. 1 nicht sichtbaren linken Teil einen Frischwasserbehälter sowie ein Steigrohr für das erhitzte Wasser aufweist. Das Steigrohr geht über eine Querverbindung, die in einem Auslager 12 des Gehäuses 11 untergebracht ist, in eine Auslauftülle 13 über, die etwa über der Mitte eines Filterträgers 14 angeordnet ist. Dieser Filterträger 14 ist mittels noch zu schildernder Einrichtungen schwenkbar am Gehäuse 11 der Kaffeemaschine 10 gelagert. In der Fig. 1 der Zeichnung ist seine Arbeitslage (Schließlage) wiedergegeben. Der Filterträger 14 nimmt einen an sich bekannten Filter 15 auf, in den eine Filtertüte eingelegt werden kann, in die das Kaffeemehl eingegeben wird, welches von dem erhitzten, aus der Auslauftülle 13 herauslaufenden Wasser durchsetzt wird. Im gewählten Ausführungsbeispiel ist der Filter 15 einstückig aus einem Kunststoff gefertigt und an seiner einen Seite mit einer Handhabe 20 versehen, die in der Fig. 1 dargestellten Arbeitslage (Schließlage) der elektrisch betriebenen Kaffeemaschine in einer Aufnahme 53 des Gehäuses 11 untergebracht ist und daher in dieser Lage von außen für den Beschauer nicht sichtbar ist. Zum Halten des Filters 15 in dem Filterträger 14 dienen an sich bekannte und daher nicht näher beschriebene Stützkörper 54. Der horizontal verlaufende Boden 16 des Filters 15 hat in seiner Mitte liegen einen Auslauf 17, dem eine Verschlußeinrichtung 18, 19 zugeordnet ist. Die Verschlußeinrichtung 18, 19 ist immer dann geschlossen, wenn das unterhalb des Filterträgers 14 angeordnete Auffanggefäß 21 entfernt ist. Das aus einem durchsichtigen Werkstoff gefertigte Auffanggefäß 21 hat einen abnehmbaren Deckel 22, der im wesentlichen eben gehalten ist. Die Deckelfläche ist mit einer mittleren Öffnung 23 versehen, die unterhalb des Auslaufs 17 des Filters 15 liegt, so daß in der in Fig. 1 angegebenen Lage der fertige Kaffee durch den Auslauf 17 des Filters 15 und durch die Öffnung 23 des Deckels 22 in das Auffanggefäß 21 gelangen kann.

Das Gehäuse 11 ist in grundsätzlich bekannter Weise mit einem horizontal angeordneten Gehäusefuß 24 versehen, in dessen Inneren z.B. eine Heizung bekannter Art untergebracht sein kann, die auch zum Warmhalten des fertiggestellten, im Auffanggefäß 21 befindlichen Kaffees dienen kann. Das Auffanggefäß 21 steht dabei auf einer ringförmigen Aufstellfläche 25 des Gehäusefußes 24.

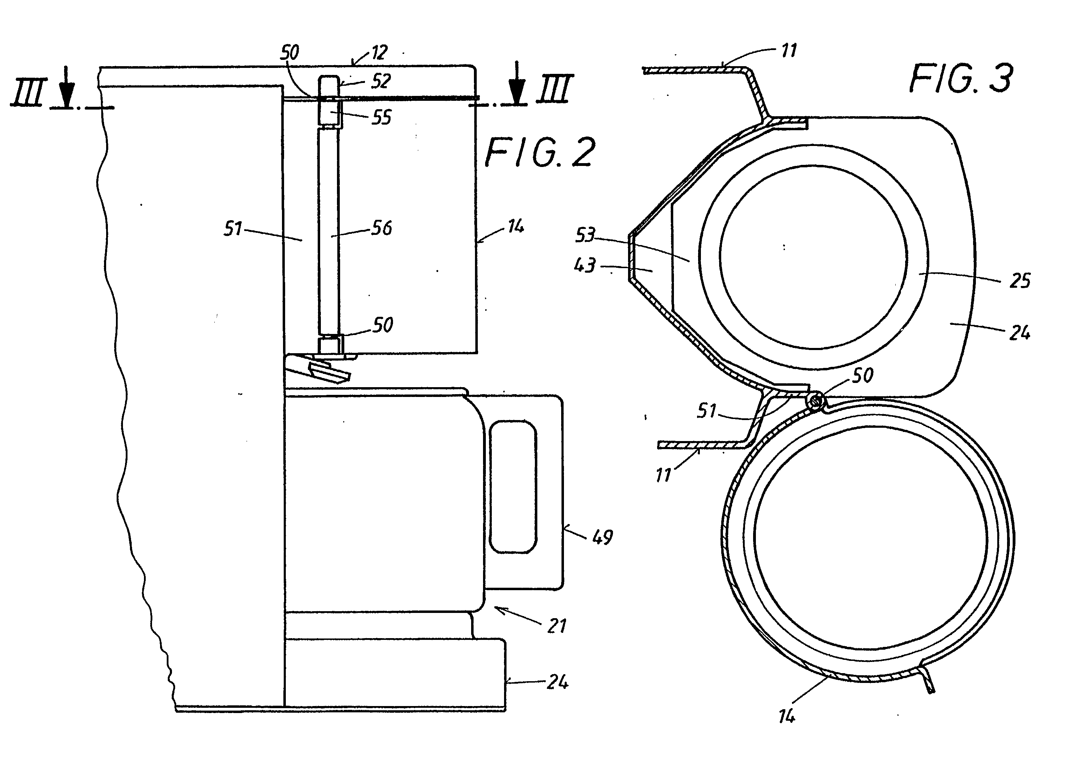

Wie aus der Fig. 2 der Zeichnung ersichtlich, ist an der Außenfläche des Auffanggefäßes 21 ein Griff 49 angebracht. Dieser kann mit grundsätzlich bekannten Befestigungsmitteln mit dem Auffanggefäß 21 verbunden sein.

Die Fig. 3 der Zeichnung läßt erkennen, daß der Filterträger 14 in eine Öffnungslage ausgeschwenkt werden kann, In dieser Lage liegt er seitlich entfernt von dem Aufstellfuß 24. Der Schwenkwinkel beträgt etwa 180°. In der Fig. 3 der Zeichnung ist der besseren Übersicht halber der Filter 15 aus dem Filterträger 14 entfernt. Die Schwenkachse des Filterträgers 14 ist mit 50 gekennzeichnet. Sie setzt sich aus zwei kurzen Bolzen zusammen, die einmal in der Nähe des Auslegers 12 angeordnet sind und zum anderen in der Nähe der Verschlußeinrichtung 18, 19,

Wie aus den Fig. 1, 2 und 3 der Zeichnung am besten ersichtlich, hat das Gehäuse 11 eine nach vorn gezogene Wand 51, an deren Ende jeweils mit einer nicht näher bezeichneten Bohrung versehene Verdickungen 55 angeordnet sind. Es sind zwei solcher Verdickungen 55 vorhanden. In die Bohrung der oberen Verdickung 55 und in eine damit fluchtende weitere Bohrung einer Lagerstelle 52 des Auslegers 12 greift der eine, den oberen Teil der Drehachse 50 bildende Bolzen ein. Ein weiterer kurzer Bolzen der Drehachse 50 ist im unteren Bereich der vorspringenden Wand 51 und zwar in der Nähe der Verschlußeinrichtung 18 und 19 liegend vorgesehen. Die beiden die Drehachse bildenden Bolzen sind zweckmäßig nach ihrem Anbringen in bekannter Weise fest mit den zusammenwirkenden Teilen verbunden, so daß sie beim bestimmungsgemäßen Gebrauch der elektrisch betriebenen Kaffeemaschine nicht verlorengehen können.

Die Verschlußeinrichtung 18, 19 ist in der Fig. 1 in ihrer unwirksamen Lage dargestellt. Diese Lage der Verschlußeinrichtung 18, 19 kann nur dann eingenommen werden, wenn das Auffanggefäß 21 in seine in der Fig. 1 dargestellte Arbeitslage unter dem Filter 15 überführt ist.

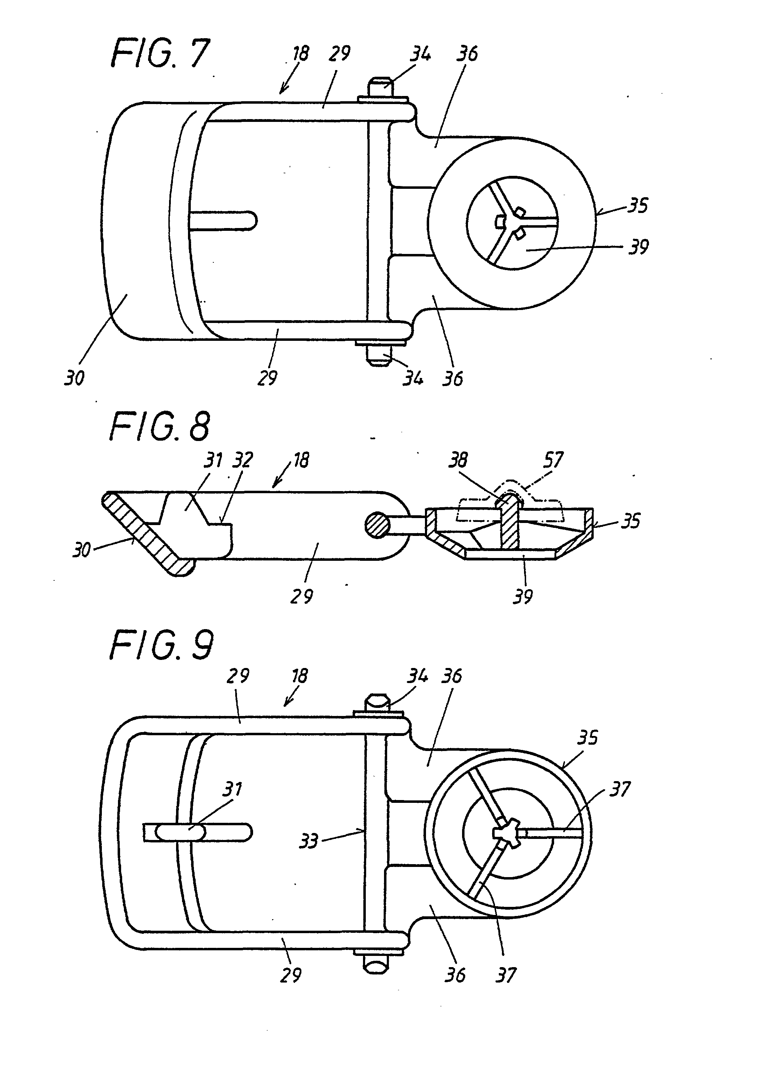

Zu der Verschlußeinrichtung 18, 19 gehört der mit 18 bezeichnete Ventilhebel, der in den Fig. 7 bis 9 der Zeichnung im vergrößerten Maßstab wiedergegeben ist. Daraus folgt, daß der Ventilhebel 18 zwei parallel und im Abstand voneinander angeordnete Schenkel 29 aufweist, die durch einen Verbindungssteg 30 miteinander verbunden sind. In seiner Mitte liegend hat .der Verbindgssteg 30 des Ventilhebels 19 einen in Richtung auf den Filter 15 weisenden und sich zum freien Ende hin verjüngenden Vorsprung 31, zu dessen beiden Seite eine Abstützfläche 32 für eine Belastungsfeder 26 vorgesehen ist. Der Ventilhebel 18 kann aus einer Arbeitslage in eine Ruhelage geschwenkt werden.

Um dieses zu ermöglichen, ist er am Filter 15 mittels einer Achse 33 gelagert. Die eigentlichen Lagerstellen sind dabei Achsstummel 34, die im Bezug auf die Schenkel 29 nach außen vorstehen. Zu dem Ventilhebel 18 gehört auch eine napfförmige Aufnahme 35, die im Querschnitt kreisrund gehalten ist und die über Verbinder 36 mit den Schenkeln 29 des Ventilhebels 18 verbunden ist. An der Innenwand der napfförmigen Aufnahme 36 sind im gewählten Ausführungsbeispiel drei Rippen 37 angeordnet, die untereinander gleichgestaltet und in regelmäßigen Abständen voneinander angeordnet sind. Sie halten einen Stift 38 in der Mitte der napfförmigen Aufnahme, wobei der Stift nach seiner Oberseite hin pilzartig erweitert ist. Der Stift dient zur Aufnahme eines Dichtelementes 57, welches mit dem Auslauf 17 des Filters 15 zusammenwirken soll. Das Dichtelement 53 kann dabei einstückig gehalten und z.B. aus Silikongummi gefertigt sein. Seine Lage in der napfartigen Aufnahme 35 ist in der Fig. 8 in strichpunktierten Linien dargestellt.

Wie aus der Fig. 1 der Zeichnung ersichtlich, ist die Belastungsfeder 26 im gewählten Ausführungsbeispiel als Druckfeder ausgebildet, wobei das untere Federende einen Halt auf der Abstützfläche 32 des Steges 30 des Ventilhebels 18 findet. Der Vorsprung 31 greift dabei in das Innere der Belastungsfeder 26 ein, so daß damit ein Ausknicken der Belastungsfeder verhindert ist. Das gegenüberliegende andere Ende der Belastungsfeder 26 stützt sich an einem Widerlager 27 ab, das im Bereich einer Verlängerung 28 des Filters 15 vorgesehen ist. Widerlager 27 und Verlängerung 28 sind dabei an einer Außenseite des Filters 15 vorgesehen. Die Belastungsfeder 26 greift im Bezug auf die Achse 33 derart am Ventilhebel an, daß dieser bei abgenommenem Auffanggefäß 21 in seine Schließrichtung überführt wird, d.h. der Auslauf 17 des Filters 15 ist gesperrt.

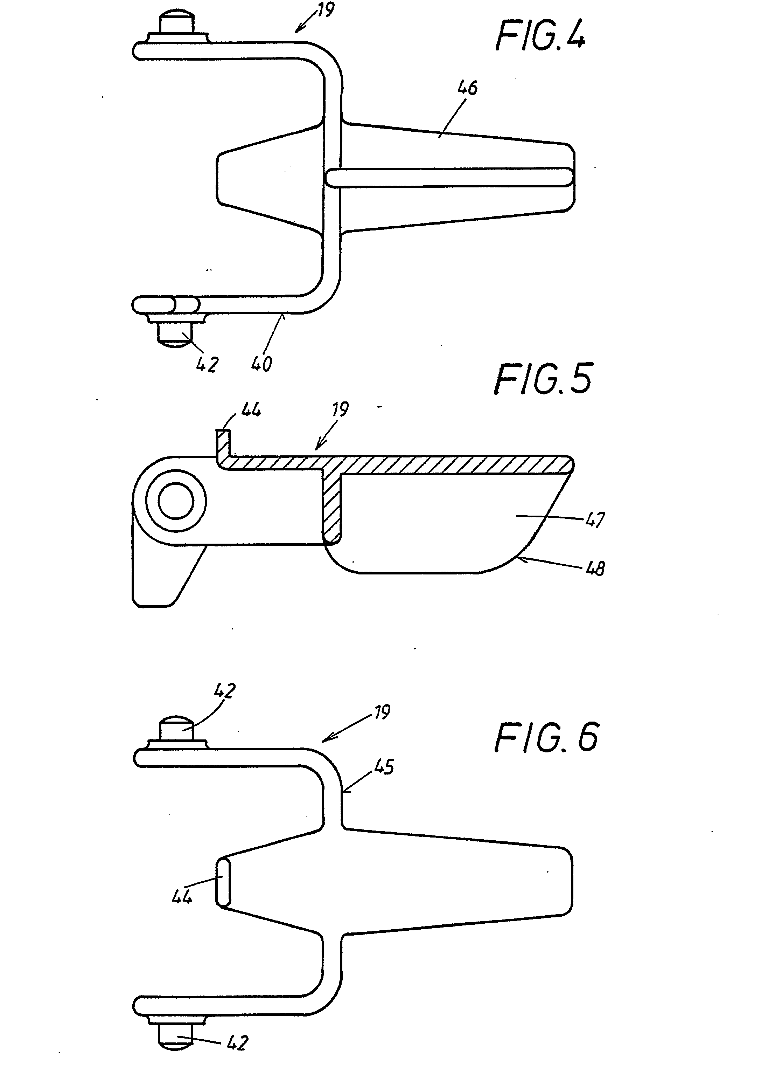

Um den Betätigungshebel 18 in seine in der Fig. 1 der Zeichnung dargestellte Offenlage überführen zu können, ist ein Betätigungshebel 19 vorhanden, der in den Fig. 4 bis 6 der Zeichnung dargestellt ist. Der einstückig aus einem Werkstoff, vorzugsweise aus einem Kunststoff, gefertigte Betätigungshebel 19 hat einen U-förmig gestalteten Rahmen 40, dessen Schenkel jeweils an der Außenseite liegend einen Lagerstummel 42 aufweisen, wobei jeder Lagerstummel 42 in eine nicht näher bezeichnete Bohrung einer Lagerstelle 41 eingreift, die an der Innenwand des Gehäuses 11 der Kaffeemaschine angeordnet ist. Oberhalb der beiden Lagerstellen 41 befindet sich ein horizontal liegender, in Richtung auf den Filter 15 ragender Vorsprung 43, der zur Bewegungsbegrenzung des Betätigungshebels 19 dient und ebenfalls dem Gehäuse 11 angeformt ist. Um die Bewegungsbegrenzung herbeizuführen, hat der Steg 45 des U-Rahmens 40 in seiner Mitte liegend und in den Raum zwischen den beiden Schenkeln des U-Rahmens ragend einen Anschlag 44, der um 90° aus der Grundebene herausgebogen ist. Nach der gegenüberliegenden anderen Seite hat der Steg 45 ebenfalls in seiner Mitte liegend einen auskragenden, plattenförmig gestalteten Teil 46, der unter einem Winkel von 90° zu seiner Grundebene liegend ein Steuerglied 47 aufweist, dessen vordere freie Kante als Steuerfläche 48 ausgebildet ist. Die Steuerfläche 48 ist gekrümmt und kommt beim Überführen des Auffanggefäßes 21 auf die Aufstellfläche 25 mit der benachbarten Oberfläche des Deckels 22 des Auffanggefäßes 21 in Wirkverbindung. Durch dieses Zusammenwirken zwischen Deckel 22 und Steuerfläche 48 wird der Betätigungshebel 19 um die Lagerstummel 44 nach oben geschwenkt. Die vordere Kante des auskragenden Teiles 46 kommt dabei mit den benachbarten Teilen des Ventilhebels 18 in Wirkverbindung und verschwenkt diesen entgegen der Einwirkung der Belastungsfeder 26 in die in der Fig. 1 der Zeichnung wiedergegebene Öffnungslage. So lange das Auffanggefäß 21 in seiner wirksamen Lage gemäß Fig. 1 angeordnet ist, bleibt der Ventilhebel 18 offen und der fertige Kaffee kann aus dem Auslauf 17 des Filters 15 durch die Öffnung 23 des Deckels 22 hindurch in den Auffangbehälter 21 fließen. Wenn dagegen aus Auffanggefäß 21 von der Aufstellfläche 25 entfernt wird, kann die Belastungsfeder 26 wirksam werden. Sie verschwenkt einmal den Ventilhebel 18 in seine Verschlußlage. Dabei wird zugleich auch der Betätigungshebel 19 in seine unwirksame Ruhelage überführt, aus der er erst beim erneuten Einschieben des Auffanggefäßes 21 wieder herausgeführt werden kann.

Durch die Ausbildung der Verschlußeinrichtung 18, 19 kann auf die Verwendung eines Deckels mit erhabenem Mittelteil für das Auffanggefäß verzichtet werden. Stattdessen kann ein im wesentlichen ebener Deckel zum Einsatz kommen. Dies läßt eine Reduzierung der Gesamthöhe der Kaffeemaschine zu. Für diese Höhenabmessungen der Kaffeemaschine ist es auch wichtig, daß der Betätigungshebel 19 einerseits und der Ventilhebel 18 andererseits etwa auf gleicher Höhe im Gehäuse liegen. Der Zwischenraum zwischen der Oberfläche des Deckels 22 und dem Boden 16 des Filters kann somit auf ein Mindestmaß herabgesetzt werden.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Ausbildung der miteinander zusammenwirkenden Teile der Verschlußeinrichtung, nämlich des Ventilhebels 18 und des Betätigungshebels 19. Diese beiden Teile können auch in anderer als der dargestellten Weise mit dem Filter 15 bzw. dem Gehäuse 11 der Kaffeemaschine 10 verbunden werden. Wesentlich ist nur, daß der Deckel 22 des Auffanggefäßes 21 nicht direkt mit dem Ventilhebel 18 zusammenwirkt sondern unter Zwischenschaltung des am Gehäuse 11 schwenkbar gelagerten Betätigungshebels 19. Auf diese Weise ist es möglich, einen im wesentlichen eben gehaltenen Deckel für das Auffanggefäß 21 zu benutzen und um damit eine niedrigere Bauhöhe der gesamten Kaffeemaschine im Vergleich mit dem Bekannten zu erhalten. Ferner ist es möglich, die Handhabe 20 des Filters 15 eine andere Ausbildung und Gestalt aufweisen zu lassen. Dabei muß nur darauf geachtet werden, daß die Handhabe 20 in der Schließlage des Filterträgers 15 in der Aufnahme 53 des Gehäuses 11 Platz findet.

Die vorspringende Wand 51 des Gehäuses 11 kann ebenfalls eine andere als die dargestellte Ausführung erhalten. Nur sollte bei Abwandlungen dieser Wand 51 darauf geachtet werden, daß ein Schwenkwinkel des Filterträgers 14 um etwa 180° erhalten bleibt. Und schließlich ist es auch möglich, den beiden kurzen Bolzen, welche gemeinsam die Drehachse 50 für den Filterträger 14 bilden, andere als die dargestellten Lagerstellen zu geben.

Bezugszeichenliste :

10 - Kaffeemaschine
11 - Gehäuse
12 - Ausleger
13 - Auslauftülle
14 - Filterträger
15 - Filter
16 - Filterboden
17 - Auslauf (in 16)
18 - Ventilhebel
19 - Betätigungshebel
20 - Handhabe (an 15)
21 - Auffanggefäß
22 - Deckel (für 21)
23 - Öffnung (in 22)
24 - Gehäusefuß
25 - Aufstellfläche (für 21)
26 - Belastungsfeder (für 18)
27 - Widerlager (für 26)
28 - Verlängerung (an 15)
29 - Schenkel (von 18)
30 - Verbindungssteg (von 29)
31 - Vorsprung
32 - Abstützfläche
33 - Achse (Schwenkachse von 18)
34 - Achsstummel
35 - napfförmige Aufnahme
36 - Verbinder
37 - Rippe
38 - Stift
39 - Durchlaß (in 35)
40 - U-Rahmen (von 19)
41 - Lagerstelle (für 19)
42 - Lagerstummel
43 - Vorsprung (an 11)
44 - Anschlag
45 - Steg (von 40)
46 - auskragender Teil
47 - Steuerglied
48 - Steuerfläche (von 47)
49 - Griff (von 21)
50 - Drehachse (für 14)
51 - vorspringende Wand (von 11)
52 - Lagerstelle
53 - Aufnahme
54 - Stützkörper
55 - Verdickung
56 - Bereich

## Patentansprüche

1. Elektrisch betriebene Kaffeemaschine mit einer Heizeinrichtung und einem Gehäuse (11), an dem ein Filterträger (14) gelagert ist, der einen mit einer Handhabe (20) ausgerüsteten Filter (15) aufnimmt und der über eine Schwenkachse (50) derart mit dem Gehäuse (11) verbunden ist, daß wahlweise sein Überführen in eine Arbeitslage und eine Öffnungslage durchführbar ist, dadurch gekennzeichnet, daß in der Arbeitslage des Filterträgers (14) die Handhabe (20) des Filters (15) nach außen abgedeckt in einer Aufnahme (53) des Gehäuses (11) angeordnet ist.

2. Kaffeemaschine nach Anspruch 1, dadurch gekennzeichnet, daß die Aufnahme (53) des Gehäuses (11) der Kaffeemaschine (10) nach unten hin durch einen Vorsprung (43) begrenzt ist, unter dem Lagerstellen (41) für einen schwenkbaren Betätigungshebel (19) einer Verschlußeinrichtung (18, 19) für den Auslauf (17) des Filters (15) angeordnet sind.

3. Kaffeemaschine nach Anspruch 2, dadurch gekennzeichnet, daß das Gehäuse (11) der Kaffeemaschine (10) eine vorspringende Wand (51) aufweist, die an ihren diametral gegenüberliegenden Enden je eine Verdickung (55) aufweist, deren Bohrung jeweils zur Unterbringung eines kurz bemessenen Bolzens dient und daß die beiden Bolzen gemeinsam die Schwenkachse (50) des Filterträgers (14) bilden.

4. Kaffeemaschine nach Anspruch 3, dadurch gekennzeichnet, daß der obere der beiden Bolzen zugleich die Bohrung einer Lagerstelle (52) des Auslegers (12) des Gehäuses (11) der Kaffeemaschine (10) durchquert.

5. Kaffeemaschine nach Anspruch 3 und 4, dadurch gekennzeichnet, daß der Filterträger (14) einen zwischen den beiden Verdickungen (55) der vorspringenden Wand (51) des Gehäuses (11) liegenden und in seinen Abmessungen den Verdickungen (55) angepaßten Bereich (56) aufweist.

6. Kaffeemaschine nach einem oder mehreren der vorangehenden Ansprüche 3 bis 5, dadurch gekennzeichnet, daß die Längenabmessungen der vorspringenden Wand (51) des Gehäuses (11) so bemessen sind, daß ein Verschwenken des Filterträgers (14) um mindestens 180° aus der Schwenklage in die Öffnungslage gegeben ist (Fig. 3).

## Claims

1. An electrically operated coffee making machine comprising a heating means and a housing (11) on which is mounted a filter carrier (14) which accommodates a filter (15) provided with a handle (20) and which is connected to the housing (11) by way of a pivot axis (50) so that it can be selectively transferred into an operative position and an open position characterised in that in the operative position of the filter carrier (14) the handle (20) of the filter (15) is arranged in a receiving means (53) in the housing (11) in such a way as to be covered relative to the exterior.

2. A coffee making machine according to claim 1 characterised in that the receiving means (53) of the housing (11) of the coffee making machine (10) is delimited downwardly by a projection (43) under which are arranged mounting means (41) for a pivotable actuating lever (19) of a closure means (18, 19) for the discharge (17) of the filter (15).

3. A coffee making machine according to claim 2 characterised in that the housing (11) of the coffee making machine (10) has a projecting wall (51) which at its diametrally oppositely disposed ends has a respective thickened portion (55) with a bore which serves for mounting a short pin, and that the two pins together form the pivot axis (50) of the filter carrier (14).

4. A coffee making machine according to claim 3 characterised in that the upper one of the two pins simultaneously passes through the bore in a mounting wans (52) of the cantilever portion (12) of the housing (11) of the coffee making machine (10).

5. A coffee making machine according to claims 3 and claim 4 characterised in that the filter carrier (14) has a region (56) which is disposed between the two thickened portions (55) of the projecting wall (51) of the housing (11) and which is adapted in its dimension to the thickened portions (55).

6. A coffee making machine according to one or more of preceding claims 3 to 5 characterised in that the longitudinal dimensions of the projecting wall (51) of the housing (11) are such as to provide for pivotal movement of the filter carrier (14) through at least 180° from the pivotal position into the open position (see Figure 3).

## Revendications

1. Cafetière électrique avec un dispositif de chauffage et un boîtier (11) auquel est articulé un porte-filtre (14) qui reçoit un filtre (15) équipé d'une poignée (20) et qui est lié au boîtier (11) par l'intermédiaire d'un axe de pivotement (50) de manière telle qu'il puisse être placé au choix dans une position de travail ou une position d'ouverture, caractérisée en ce que, dans la position de travail du porte-filtre, la poignée (20) du filtre (15) est disposée de manière masquée de l'extérieur dans un logement (53) du boîtier (11).

2. Cafetière selon la revendication 1, caractérisée en ce que le logement (53) du boîtier (11) de la cafetière (10) est limité vers le bas par une butée (43) sous laquelle sont disposés les points d'appui (41) d'un levier d'actionnement oscillant (19) d'un dispositif d'obturation (18, 19) pour la sortie (17) du filtre (15).

3. Cafetière selon la revendication 2 caractérisée en ce que le boîtier (11) de la cafetière (10) comporte une paroi saillante (51) qui, en chacune de deux extrémités diamétralement opposées, présente un épaississement (55) dont des alésages respectivement servent à recevoir une cheville de courte dimension et en ce que les deux chevilles constituent ensemble l'axe de pivotement (50) du porte-filtre (14).

4. Cafetière selon la revendication 3, caractérisée en ce que la cheville supérieure des deux chevilles traverse également l'alésage d'un point d'appui (52) d'un compartiment (12) du boîtier (11) de la cafetière (10).

5. Cafetière selon la revendication 3 ou 4, caractérisée en ce que le porte-filtre (14) comporte une région s'étendant entre les deux épaississements (55) de la paroi saillante (51) du boîtier (11) et dont les dimensions sont adaptées à ces épaississements (55).

6. Cafetière selon l'une ou plusieurs des revendications 3 à 5, caractérisée en ce que la dimension longitudinale de la paroi saillante (51) du boîtier (11) est dimensionnée de façon telle qu'un basculement du porte-filtre (14) d'au moins 180° est possible de la position de fermeture dans la position d'ouverture (figure 3).

FIG.1

FIG. 2

FIG. 3

EP 0 283 569 B1

FIG.4

19

46

42 40

FIG.5

44 19

47

48

FIG.6

42

19

45

44

42

FIG. 7

FIG. 8

FIG. 9